# EUROPÄISCHE PATENTANMELDUNG

(11) **EP 0 590 190 A1**
(43) Veröffentlichungstag der Anmeldung: **06.04.1994**
(21) Anmeldenummer: 92116742.5
(22) Anmeldetag: 30.09.1992
(51) Int. Cl.: G01P 3/481

(54) **Signalgeber**

(71) Anmelder: SIEMENS AKTIENGESELLSCHAFT, D-80333 München (DE)
(72) Erfinder: Göser, Gerhard, Dipl.-Ing., W-8401 Pentling (DE); Maier, Theodor, Dipl.-Ing., W-8400 Regensburg (DE)

(57) **Zusammenfassung**

Signalgeber mit einem Zahn- oder Segment-Geberteil (6) zur Umwandlung eines Abstandsschwankungen aufweisenden analogen Sensorsignals (s) in ein digitales Gebersignal (R), wobei ein oberer und unterer Schwellwert (So, Su) von dem jeweiligen oberen und unteren Spitzenwert (O, U) des Sensorsignals abgeleitet und mit diesem Sensorsignal (s) verglichen wird.

## Beschreibung

Die Erfindung betrifft einen Signalgeber nach dem Oberbegriff von Anspruch 1 (EP 0 024 836 B1).

Bekannte Signalgeber der genannten Art tasten Zähne bzw. Segmente und Lücken eines drehenden Geberteils ab, wodurch zunächst ein analoges elektrisches Abbild der Oberfläche des Geberteils entsteht. Anschließend wird dieses analoge Sensorsignal in eine Folge diskreter, digitaler Zustandsmeldungen (Zahn, Lücke, Referenzzahn bzw. Referenzlücke) umgewandelt. Für diese Umwandlung wird mindestens eine Entscheidungsschwelle benötigt. Üblich sind auch zwei Schwellwerte, die durch einen Hysteresebetrag voneinander unterschieden sind.

Aus der EP 0 024 836 ist ein Signalgeber bekannt, bei welchem das analaoge Sensorsignal mit einem Schwellwert verglichen wird, der dem aus dem kleinsten und größten Signalwert (Spitzenwert) des Sensorsignals gebildeten Mittelwert entspricht.

Aus der DE-OS 37 14 271 ist eine Auswerteschaltung für Induktivgeber bekannt, welche das Sensorsignal mit zwei Schwellwerten vergleicht, die durch einen Komparator, der eine Schalthysterese aufweist, gebildet werden.

Probleme bei der Bildung des digitalen Ausgangssignals eines solchen bekannten Signalgebers ergeben sich, wenn außer der normalen Folge von Zähnen und Lücken erhebliche zusätzliche Abstandsschwankungen auftreten. Die Ursachen für solche Schwankungen können z.B. Exzentrizität der Zahnradachse, unrunde Form des Zahnrades, unrunder Radlauf oder einzelne im Sensorsignal durch besonders große Signalwerte wiedergegebene Zähne oder Lücken sein. Die Auswirkungen derartiger Schwankungen bei bekannten Signalgebern sind unregelmäßige Gebersignale, die beispielsweise bei elektronischen Motorsteuerungen bis zu deren Funktionsunfähigkeit führen können.

Aufgabe der Erfindung ist es, einen Signalgeber zu schaffen, der von solchen Schwankungen herrührende Unregelmäßigkeiten des Gebersignals richtig interpretiert.

Diese Aufgabe wird erfindungsgemäß durch die in den Patentansprüchen angegebenen Merkmale gelöst.

Die Erfindung wird im folgenden anhand der Zeichnung näher erläutert. Es zeigen:
- Figur 1: die Signale eines ersten bekannten Signalgebers über der Zeit t,
- Figur 2: die Signale eines zweiten bekannten Signalgebers über der Zeit t,
- Figur 3: die Signale des erfindungsgemäßen Signalgebers über der Zeit t, und
- Figur 4: ein schematisches Blockschaltbild eines erfindungsgemäßen Signalgebers.

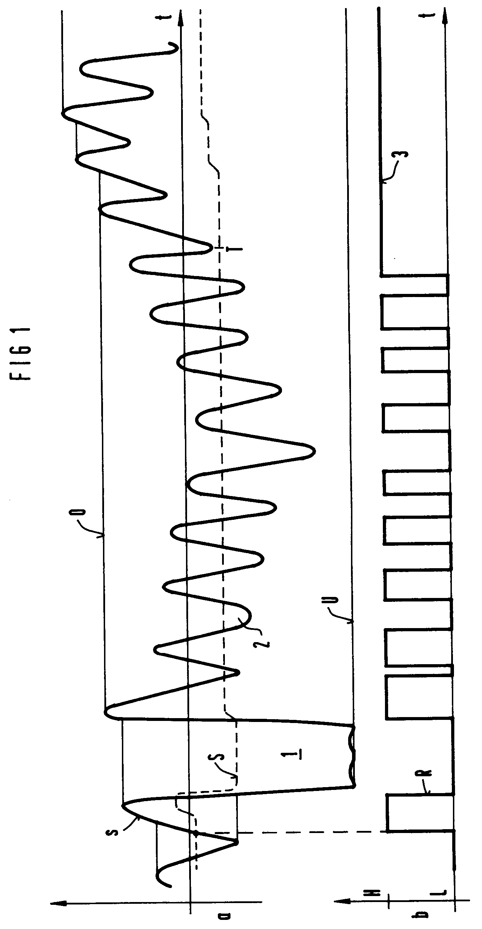

In Figur 1a ist ein Sensorsignal s über der Zeit t dargestellt, welches von einem Zahnradgeberteil herrührt, dem ein Zahn fehlt, so daß eine Lücke 1 entsteht, die wesentlich breiter als die übrigen Lücken 2 ist und damit auf bekannte Art und Weise leicht detektiert werden kann.

Dieses Zahnradgeberteil weist beispielsweise eine unrunde Form des Zahnrades auf, so daß das in Figur 1a dargestellte Sensorsignal s nicht nur die sinusähnliche Kurvenform vom Vorbeilauf der Zähne und Lücken am Aufnehmer aufweist, sondern auch mit einer der Drehzahl des Geberteils entsprechenden Frequenz moduliert ist.

Bei dem aus der EP 0 024 836 bekannten Signalgeber, der solche Modulationen nicht berücksichtigt, wird jeweils der größte obere und untere Spitzenwert O, U dieses Sensorsignals s detektiert und gespeichert und ein dem Mittelwert beider Spitzenwerte entsprechender Schwellwert S (in Figur 1 gestrichelt) gebildet, mit dem das Sensorsignal s verglichen wird. Je nachdem, ob das Sensorsignal s kleiner oder größer als der jeweilige Schwellwert S ist, wird am Ausgang des Signalgebers ein digitales Gebersignal R mit einem niedrigen "LOW"-Pegel L oder einem hohen "HIGH"-Pegel H ausgegeben (Figur 1b).

Solange der Schwellwert S zwischen den oberen und unteren Spitzenwerten des Sensorsignals s liegt, ist eine korrekte Umwandlung des analogen Sensorsignals in ein digitales Gebersignal möglich. Werden jedoch die unteren Spitzenwerte U größer als der Schwellwert S (oder die oberen Spitzenwerte O kleiner als dieser), was ab dem Zeitpunkt T in Figur 1a der Fall ist, so versagt ab diesem Zeitpunkt die korrekte Umwandlung des Sensorsignals, da dann der Schwellwert von dem oder den folgenden Spitzenwerten nicht unter- bzw. überschritten wird und das digitale Gebersignal R dann eine Unregelmäßigkeit aufweist, die sich in einem überlangen H-Pegel-Signal 3 (oder einem überlangen L-Pegel-Signal) äußert, welches für eine Auswertung nicht geeignet ist.

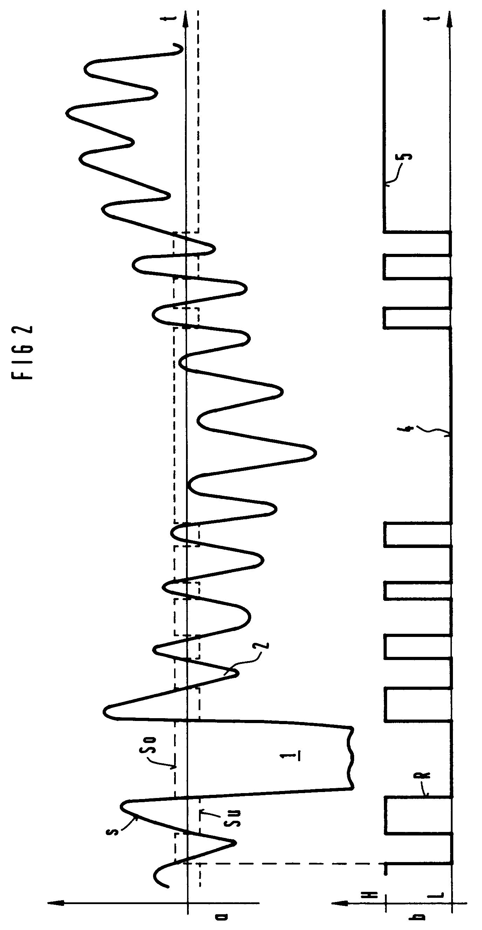

In Figur 2a ist das gleiche Sensorsignal s wie in Figur 1a dargestellt. Es soll diesmal mit einem aus der DE-OS 37 14 271 bekannten Signalgeber ausgewertet werden. Dieser Signalgeber weist einen Komparator mit Hysterese auf, der einen positiven Schwellwert So erzeugt, wenn das Sensorsignal s kleiner als der Schwellwert ist, und einen negativen Schwellwert Su erzeugt, wenn das Sensorsignal größer als der Schwellwert ist. Mit diesem wechselnden Schwellwert So, Su (in Figur 2a gestrichelt) wird das Sensorsignal s verglichen. Der Signalgeber gibt wieder ein digitales Gebersignal R ab (Figur 2b), welches einen H-Pegel aufweist, wenn das Sensorsignal s größer als der Schwellwert ist, und im anderen Fall einen L-Pegel aufweist. Auch dieser Signalgeber versagt, solange die oberen Spitzenwerte des Sensorsignals s kleiner als der obere Schwellwert So wird oder die unteren Spitzenwerte größer als der untere Schwellwert Su, wie in Figur 2b in den Abschnitten 4 und 5 dargestellt.

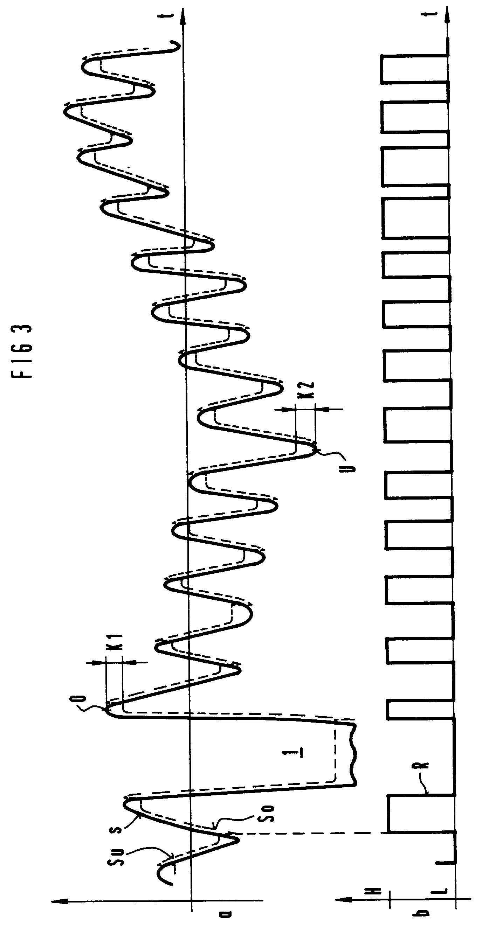

Auch in Figur 3a ist das gleiche Sensorsignal s wie in Figur 1a und 2a dargestellt, welches jetzt mit dem erfindungsgemäßen Signalgeber ausgewertet werden soll. Dieser Signalgeber ermittelt laufend die oberen und unteren Spitzenwerte O.V des Sensorsignals s und bildet daraus den oberen und unteren Schwelllwert So, Su in der Weise, daß er (in diesem Ausführungsbeispiel) einen vorgegebenen Betrag K1 vom oberen Spitzenwert O subtrahiert bzw. einen vorgegebenen Betrag K2 zum unteren Spitzenwert U addiert und diese Schwellwerte dann solange konstant hält, bis das Sensorsignal s den oberen Schwellwert So unterschreitet bzw. den unteren Schwellwert Su überschreitet.

Unterschreitet das Sensorsignal s den oberen Schwellwert So, so wird dieser umgeschaltet auf den "mitlaufenden" Wert (s + K2), der dem Sensorsignal solange folgt, bis der untere Spitzenwert U erreicht ist. Ab diesem Zeitpunkt wird der Schwellwert Su konstant gehalten, bis er vom Sensorsignal s wieder überschritten wird. Jetzt wird der Schwellwert So gebildet, indem er auf den Wert (s - K1) umgeschaltet wird, der dem Sensorsignal solange folgt, bis der obere Spitzenwert O erreicht ist. Ab diesem Zeitpunkt wird der Schwellwert So konstant gehalten, bis er vom Sensorsignal s unterschritten wird, usw.

Wenn das Sensorsignal s größer als der jeweilige Schwellwert ist, wird ein digitales Gebersignal R mit H-Pegel (und wenn es kleiner ist, ein digitales Gebersignal R mit L-Pegel) ausgegeben (Figur 3b).

Der Fall, daß der untere Spitzenwert U größer als der untere Schwellwert Su oder der obere Spitzenwert O kleiner als der obere Schwellwert So wird, kann hier nicht auftreten, so daß Unregelmäßigkeiten des Gebersignals R, wie in Figur 1b und 2b beobachtet, bei der erfindungsgemäßen Lösung nicht auftreten können.

Die vorgegeben Beträge K1 und K2, um die sich die Schwellwerte von den Spitzenwerten bzw. vom Sensorsignal unterscheiden, sind im einfachsten Ausführungsbeispiel vorgegebene Konstantwerte. Sie können, je nach Ausbildung der Zähne bzw. Segmente des Geberteils, gleich groß oder unterschiedlich groß sein, von der Amplitude des vorhergehenden Spitzenwertes oder von der Differenz der Amplituden der letzten beiden vorhergehenden Spitzenwerte abhängen und auf einen vorgegebenen Maximalwert begrenzt werden. Diese Auswahl an Maßnahmen ermöglicht eine optimale Angleichung der Schwellwerte an die unterschiedlichsten Verläufe möglicher Sensorsignale.

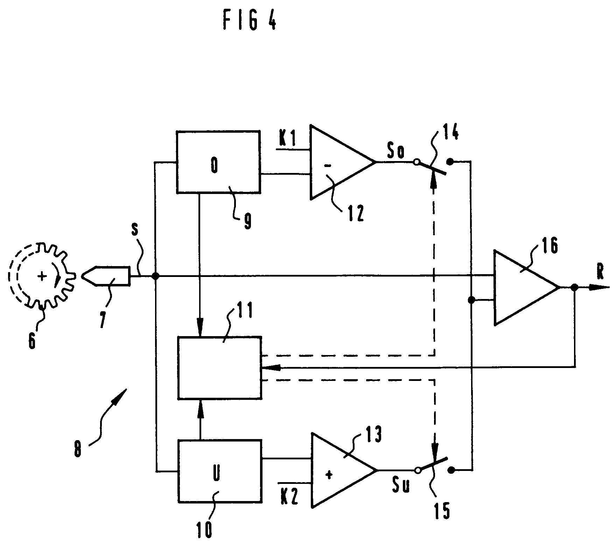

In Figur 4 ist ein schematisches Blockschaltbild eines erfindungsgemäßen Signalgebers dargestellt. Ein mit 6 bezeichnetes Geberteil ist mit über den Umfang gleichmäßig verteilten Zähnen und Lücken bestückt, wobei ein Zahn zur Bildung eines Referenzsignals fehlt (Lücke 1).

Die Zähne und Lücken des Geberteils 6 werden an einem ortsfesten Aufnehmer 7 vorbeibewegt, der ein in Figur 3a dargestelltes analoges Sensorsignal s erzeugt, welches einer Auswerteschaltung 8 zugeführt wird, die es in ein digitales Gebersignal R umwandelt (siehe Figur 3b).

Die Auswerteschaltung 8 weist einen Spitzenwertdetektor 9 zur Ermittlung der oberen Spitzenwerte O des Sensorsignals s und einen Spitzenwertdetektor 10 zur Ermittlung der unteren Spitzenwerte U des Sensorsignals s, welches diesen Spitzenwertdetektoren zugeführt wird, auf.

Gemäß der Beschreibung zu Figur 3 wird der obere Spitzenwert O oder das Sensorsignal s einem Subtrahierglied 12 zugeführt, in welchem durch Subtraktion eines vorgegebenen Betrages K1 ein oberer Schwellwert So gebildet wird.

Der untere Spitzenwert U bzw. das Sensorsignal s wird einem Addierglied 13 zugeführt, in welchem durch Addition eines vorgegebenen Betrages K2 der untere Schwellwert Su gebildet wird.

Die beiden Schwellwerte So und Su werden, über Schalter 14, 15 gesteuert, einem Komparator 16 zugeführt, in welchem das Sensorsignal s abwechselnd mit ihnen verglichen wird und welcher das Gebersignal R entsprechend dem Vergleichsergebnis bildet.

Die Steuerung der Schwellwerte wird in Abhängigkeit von den Spitzenwerten O,U und dem Gebersignal R (bzw. dem Vergleichsergebnis zwischen Sensorsignal s mit dem Schwellwert So, Su) in einer Schaltung 11 gemäß der Beschreibung zu Figur 3 vorgenommen.

## Patentansprüche

1. Signalgeber, insbesondere Drehzahl- und/oder Stellungsgeber für Kraftfahrzeuge,
- mit einem mit Zähnen und/oder Segmenten versehenen, drehbaren Geberteil (6),
- mit einem ortsfesten Aufnehmer (7), welcher ein den an ihm vorbeibewegten Zähnen und/oder Segmenten zugeordnetes Sensorsignal (s) erzeugt, und
- mit einer Auswerteschaltung (8), in welcher das Sensorsignal laufend durch Vergleich mit mindestens einem, wenigstens dem zuletzt ermittelten oberen und unteren Spitzenwert (O, U) des Sensors zugeordneten Schwellwert in ein digitales Gebersignal (R) umgewandelt wird,
**dadurch gekennzeichnet,**
- daß ein oberer Schwellwert (So) vorgesehen ist, welcher um einen vorgegebenen Betrag (K1) kleiner als das Sensorsignal (s) bzw. als der obere Spitzenwert (O) des Sensorsignals (s) ist, und
- daß ein unterer Schwellwert (Su) vorgesehen ist, welcher um einen vorgegebenen Betrag (K2) größer als das Sensorsignal (s) bzw. als der untere Spitzenwert (U) des Sensorsignals (s) ist.

2. Signalgeber nach Anspruch 1,
**dadurch gekennzeichnet,**
daß die vorgegebenen Beträge (K1, K2) für die Bildung des oberen und unteren Schwellwertes (So, Su) gleich groß sind.

3. Signalgeber nach Anspruch 1,
**dadurch gekennzeichnet,**
daß die vorgegebenen Beträge (K1, K2) für die Bildung des oberen und unteren Schwellwertes (So, Su) ungleich groß sind.

4. Signalgeber nach Anspruch 1,
**dadurch gekennzeichnet,**
daß wenigstens einer der vorgegebenen Beträge (K1, K2) für die Bildung des oberen und/oder unteren Schwellwertes (So, Su) ein Konstantbetrag ist.

5. Signalgeber nach Anspruch 1,
**dadurch gekennzeichnet,**
daß wenigstens einer der vorgegebenen Beträge (K1, K2) für die Bildung des oberen und/oder unteren Schwellwertes (So, Su) der Amplitude des vorhergehenden Spitzenwertes (O, U) zugeordnet ist.

6. Signalgeber nach Anspruch 1,
**dadurch gekennzeichnet,**
daß wenigstens einer der vorgegebenen Beträge (K1, K2) für die Bildung des oberen und/oder unteren Schwellwertes (So, Su) der Differenz der Amplituden der beiden vorhergehenden Spitzenwerte (O, U) zugeordnet ist.

7. Signalgeber nach Anspruch 1,
**dadurch gekennzeichnet,**
daß wenigstens einer der vorgegebenen Beträge (K1, K2) für die Bildung des oberen und/oder unteren Schwellwertes (So, Su) kleiner als ein vorgegebener Maximalwert ist.
